# EUROPEAN PATENT APPLICATION

(11) **EP 2 782 397 A1**
(43) Date of publication of application: **24.09.2014**
(21) Application number: 14150201.3
(22) Date of filing: 06.01.2014
(51) Int. Cl.: H04W 48/08, H04W 48/20, H04W 84/12, H04W 88/06

(54) **Base stations, mobile communication devices, and methods for assisting a mobile communication device in connecting to an access point (AP) when camped on or connected to a base station**

(30) Priority: 22.03.2013 US 201361804201 P; 05.07.2013 US 201361843212 P; 22.07.2013 US 201361857167 P; 20.12.2013 US 201314135747
(71) Applicant: Acer Incorporated, Taipei Hsien 221 (TW)
(72) Inventor: Ye, Shiang-Rung, 221 Hsichih, Taipei Hsien (TW)
(74) Representative: 2K Patentanwälte Blasberg Kewitz & Reichel

(57) **Abstract**

A base station providing a cellular access service in a cell coverage includes a wireless module and a controller module. The wireless module performs wireless transmissions and receptions to and from a mobile communication device using a telecommunication technology. The controller module determines one or more Access Points (APs) providing a Short Range Wireless (SRW) service in the cell coverage, selects one or more APs from the determined APs, and sends access information of the selected APs to the mobile communication device.

## Description

### CROSS REFERENCE TO RELATED APPLICATIONS

This Application claims priority of U.S. Application No. 14/135,747, filed on December 20, 2013, which further claims priority of U.S. Provisional Application No. 61/804,201, filed on March 22, 2013, and U.S. Provisional Application No. 61/843,212, filed on July 05, 2013, and U.S. Provisional Application No. 61/857,167, filed on July 22, 2013, the entirety of which is incorporated by reference herein.

### BACKGROUND OF THE INVENTION

### FIELD OF THE INVENTION

The invention generally relates to interworking of heterogeneous radio networks, and more particularly, to assisting a mobile communication device in connecting to an Access Point (AP) when camped on or connected to a base station.

### DESCRIPTION OF THE RELATED ART

With growing demand for ubiquitous computing and networking, various wireless technologies have been developed, such as the Short Range Wireless (SRW) technologies, including the Wireless Fidelity (WiFi) technology, Bluetooth technology, and the ZigBee technology, etc., as well as the telecommunication technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and Time- Division LTE (TD-LTE) technology, etc.

For user convenience and flexibility, most Mobile Stations (MSs) (or may be referred to as User Equipments (UEs)) nowadays are equipped with more than one wireless communication module for supporting different wireless technologies. However, each supported wireless technology has its own features, such as bandwidth, average coverage, and service rate, etc. Particularly, the bandwidth and coverage provided to an MS by a wireless network may vary according to the location conditions of the MS and/or the time conditions.

Taking an MS equipped with a WCDMA module and a WiFi module as an example, it may selectively obtain wireless services using the WCDMA technology and/or the WiFi technology. The wireless services obtained using the WCDMA technology generally have a rather limited bandwidth, but better mobility, while the wireless services obtained using the WiFi technology generally have a sufficient bandwidth, but lack mobility.

Conventionally, the WCDMA module is initially turned on, while the WiFi module is initially turned off and needs to be turned on manually to perform a full scan for every possible AP nearby. Next, the MS may connect to one of the scanned APs, which is determined manually and randomly by the user of the MS or determined automatically by the MS with a previous connection history. That is, the WCDMA system which the MS is connected to via the WCDMA module does not have control over which AP the MS should connect to via the WiFi module. Thus, it is very likely that the connected AP may not have the best channel quality or signal quality, or enough bandwidth among all available APs, or even worse, the connected AP may not be suitable for providing stable services, which would require further connection attempts by the MS to select another AP, thereby causing waste of time and power.

### BRIEF SUMMARY OF THE INVENTION

In order to solve the aforementioned problem, the invention proposes base stations, mobile communication devices, and methods for assisting a mobile communication device in connecting to an AP when connected to a base station.

In one aspect of the invention, a base station providing a cellular access service in a cell coverage is provided. The base station comprises a wireless module and a controller module. The wireless module performs wireless transmissions and receptions to and from a mobile communication device using a telecommunication technology. The controller module determines one or more APs providing an SRW service in the cell coverage, selecting one or more APs from the determined APs, and sends access information of the selected APs to the mobile communication device.

In another aspect of the invention, a mobile communication device camped on or connected to a base station is provided. The mobile communication device comprises a first wireless module, a second wireless module, and a controller module. The first wireless module performs wireless transmissions and receptions to and from the base station using a telecommunication technology. The second wireless module performs wireless transmissions and receptions using an SRW technology. The controller module receives access information of one or more APs from the base station via the first wireless module, and scans for only the APs indicated by the access information to connect to one of the scanned APs via the second wireless module.

In yet another aspect of the invention, a method for assisting a mobile communication device in connecting to an AP when camped on or connected to a base station is provided. The method comprises the steps of: determining, by the base station, one or more APs providing an SRW service in a cell coverage of the base station; selecting, by the base station, one or more APs from the determined APs; and sending, by the base station, access information of the selected APs to the mobile communication device.

Other aspects and features of the present invention will become apparent to those with ordinarily skill in the art upon review of the following descriptions of specific embodiments of the base stations, the mobile communication devices, and the methods for assisting a mobile communication device in connecting to an AP when camped on or connected to a base station.

### BRIEF DESCRIPTION OF DRAWINGS

The invention can be more fully understood by reading the subsequent detailed description and examples with references made to the accompanying drawings, wherein:
Fig. 1 is a block diagram of a wireless communications environment according to an embodiment of the invention;
Fig. 2 is a block diagram illustrating the mobile communication device 110 according to an embodiment of the invention;
Fig. 3 is a flow chart illustrating the method for assisting a mobile communication device in connecting to an AP when camped on or connected to a base station according to an embodiment of the invention; and
Fig. 4 is a message sequence chart illustrating the assisting of the mobile communication device 110 in connecting to the AP 130 or 140 when camped on or connected to the base station 1211 according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

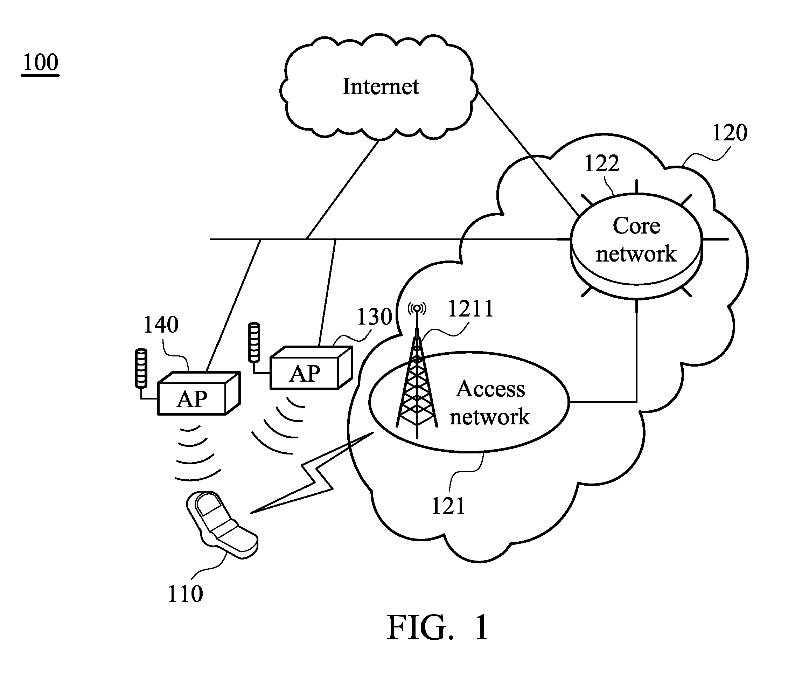

Fig. 1 is a block diagram of a wireless communications environment according to an embodiment of the invention. The wireless communications environment 100 comprises a mobile communication device 110, a telecommunication network 120 and APs 130 and 140. The mobile communication device 110 may be a smart phone, a panel Personal Computer (PC), a laptop computer, or any computing device supporting at least the SRW technology utilized by the APs 130 and 140 and the telecommunication technology utilized by the telecommunication network 120. The mobile communication device 110 may selectively connect to one or both of the telecommunication network 120 and the AP 130 or 140 for obtaining wireless services. The telecommunication network 120 may be a GSM system, GPRS system, WCDMA system, CDMA-2000 system, TD-SCDMA system, WiMAX system, LTE system, LTE-Advanced system, or TD-LTE system, etc., depending on the telecommunication technology in use. The telecommunication network 120 comprises at least an access network 121 and a core network 122, wherein the access network 121 is responsible for processing radio signals, terminating radio protocols, and connecting the mobile communication device 10 with the core network 220, and the core network 122 is responsible for performing mobility management, network-side authentication, and interfaces with public networks. The access network 121 comprises at least a base station 1211 for providing the functionality of wireless transceiving for the telecommunication network 120. Alternatively, the access network 121 may further comprise a base station controller for controlling the operation of the base station.

For example, if the telecommunication network 120 is a WCDMA system, the access network 121 may be a Universal Terrestrial Radio Access Network (UTRAN) which includes at least a Node-B (NB) and a Radio Network Controller (RNC), and the core network 122 may be a General Packet Radio Service (GPRS) core which includes a Home Location Register (HLR), at least one Serving GPRS Support Node (SGSN), and at least one Gateway GPRS Support Node (GGSN). Alternatively, if the telecommunication network 120 is an LTE or LTE-Advanced system, the access network 121 may be an Evolved-UTRAN (E-UTRAN) which includes at least an evolved NB (eNB), and the core network 122 may be an Evolved Packet Core (EPC) which includes a Home Subscriber Server (HSS), Mobility Management Entity (MME), Serving Gateway (S-GW), and Packet Data Network Gateway (PDN-GW or P-GW).

The APs 130 and 140 may each form an SRW network, implemented as alternatives for providing wireless services for the mobile communication device 110. For example, the APs 130 and 140 may be deployed by or operate in cooperation with the operator of the telecommunication network 120 or the partner of the operator of the telecommunication network 120. Specifically, the APs 130 and 140 may connect to a local area network by an Ethernet cable, and they typically receive, buffer, and transmit data traffic which is to be directed to and from the mobile communication device 110. The APs 130 and 140 may be connected to the core network 122 directly or via the Internet, as shown in Fig. 1. In general, for the APs 130 and 140 utilizing the WiFi technology, each of them may have, on average, a coverage varying from 20 meters in an area with obstacles (walls, stairways, elevators etc) to 100 meters in an area with a clear line of sight. Alternatively, the APs 130 and 140 may utilize another SRW technology, such as the Bluetooth technology, the ZigBee technology, or others, and the invention is not limited thereto.

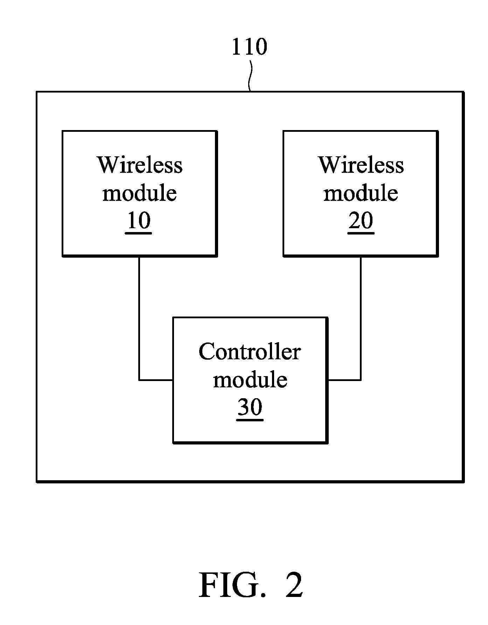

Fig. 2 is a block diagram illustrating the mobile communication device 110 according to an embodiment of the invention. The mobile communication device 110 comprises two wireless modules 10 and 20, and a controller module 30. The wireless module 10 is responsible for performing the functionality of wireless transmissions and receptions to and from the telecommunication network 120. The wireless module 20 is responsible for performing wireless transmissions and receptions to and from the AP 130 or 140. The controller module 30 is responsible for controlling the operations of the wireless modules 10 and 20, and other functional components (not shown), such as a display unit and/or keypad serving as the Man-Machine Interface (MMI), a storage unit storing the program codes of applications or communication protocols, a Global Positioning System (GPS) unit for obtaining location information, or others. Also, the controller module 30 controls the wireless modules 10 and 20 for performing the method for assisting the mobile communication device 110 in connecting to the AP 130 or 140 when camped on or connected to the base station 1211.

To further clarify, each of the wireless modules 10 and 20 may be a respective Radio Frequency (RF) unit, and the controller module 30 may be a general-purpose processor or a Micro Control Unit (MCU) of a baseband unit (not shown). The baseband unit may contain multiple hardware devices to perform baseband signal processing, including analog-to-digital conversion (ADC)/digital-to-analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 2.4GHz, 3.6GHz, 4.9GHz, or 5GHz utilized in WiFi technology, or 900MHz, 1900MHz, or 2100MHz utilized in WCDMA technology, or 900MHz, 2100MHz, or 2.6GHz utilized in LTE/LTE-Advanced technology, or others depending on the wireless technology in use.

Similar to the embodiment of Fig. 2, the base station 1211 may comprise a wireless module (not shown) and a controller module (not shown), wherein the wireless module is configured to perform the functionality of wireless transceiving to and from the mobile communication device 110 using a telecommunication technology, and the controller module is configured to control the operation of the wireless module for performing the method for assisting the mobile communication device 110 in connecting to the AP 130 or 140 when camped on or connected to the base station 1211. Regarding the detailed description of the wireless module and the controller module in similarity, reference may be made to the embodiment of Fig. 2.

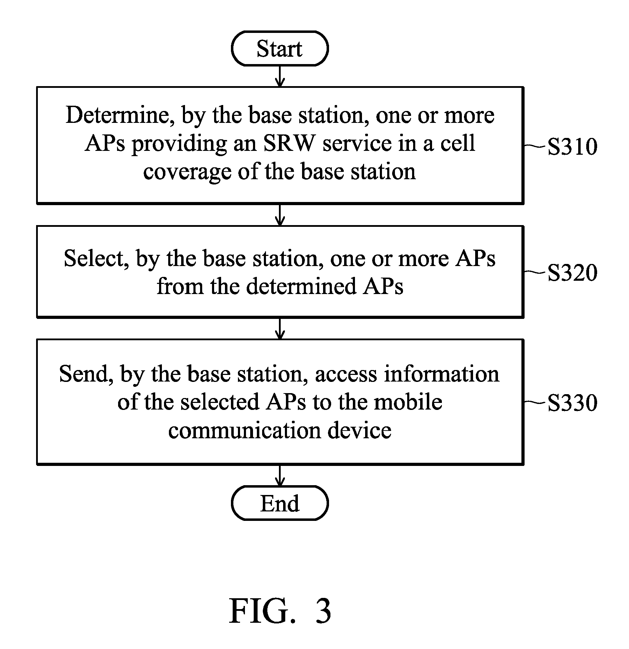

Fig. 3 is a flow chart illustrating the method for assisting a mobile communication device in connecting to an AP when camped on or connected to a base station according to an embodiment of the invention. The method may be applied in the Radio Resource Control (RRC) layer, and/or the Application layer of the communication protocol in use between the mobile communication device and the telecommunication network. In this embodiment, the mobile communication device is initially camped on or connected to a base station of a telecommunication network. To begin, the base station determines one or more APs providing the SRW service in the cell coverage of the base station (step S310). In one embodiment, the SRW service may be provided using the WiFi technology. In another embodiment, another SRW technology, such as Bluetooth technology or ZigBee technology, may be used to provide the SRW service, and the invention is not limited thereto.

Next, the base station selects one or more APs from the determined APs (step S320). Specifically, the selecting of APs from the determined APs may be performed according to the traffic loads of the determined APs, the channel qualities of the determined APs, and/or the operation statuses of the determined APs, which each indicates whether a respective one of the determined APs is operative, inoperative, reserved, or unreserved. For example, the selected APs should have corresponding traffic loads lower than a first predetermined threshold, or have corresponding channel qualities greater than a second predetermined threshold, or have corresponding operation statuses indicating that the selected APs are operative and/or unreserved.

After that, the base station sends access information of the selected APs to the mobile communication device (step S330). The access information may contain the Service Set Identifications (SSID) (e.g., BSSID, or ESSID), location information (e.g., latitude and longitude), and used channels of the selected APs. The access information of the selected APs may be sent via a broadcast message or a dedicated message. For example, the access information of the selected APs may be sent in a broadcast message, if the mobile communication device is operating in an idle mode; or the access information of the selected APs may be sent in a dedicated message, if the mobile communication device is operating in a connected mode.

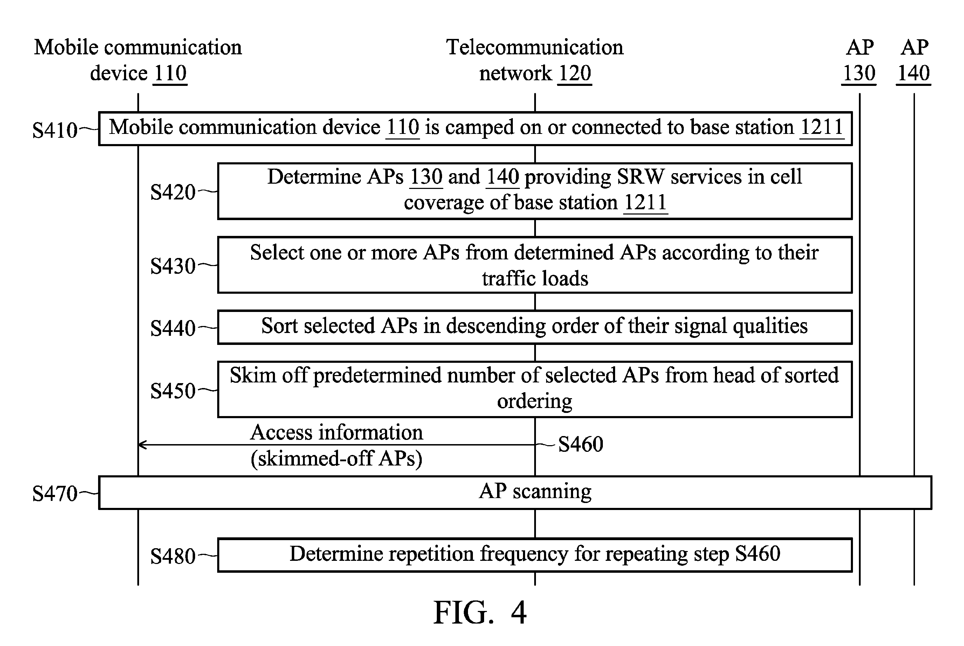

Fig. 4 is a message sequence chart illustrating the assisting of the mobile communication device 110 in connecting to the AP 130 or 140 when camped on or connected to the base station 1211 according to an embodiment of the invention. To begin, the mobile communication device 110 is initially camped on or connected to the base station 1211 (step S410). To further clarify, the mobile communication device 110 may camp on the base station 1211 when in the idle mode, or may be connected to the base station 1211 when in the connected mode. For example, the idle mode may refer to the RRC idle mode, i.e., the idle mode defined for the RRC layer, and the connected mode may refer to the RRC connected mode, i.e., the connected mode defined for the RRC layer. The detailed description of the idle mode and connected mode is omitted herein for brevity since it is beyond the scope of the invention, and reference may be made to the 3rd Generation Partnership Project (3GPP) specifications. Next, the base station 1211 determines that APs 130 and 140 are providing SRW services in the cell coverage of the base station 1211 (step S420), and then selects one or more APs from the determined APs, i.e., the APs 130 and 140, according to their corresponding traffic loads (step S430). In this embodiment, it is assumed that both of the APs 130 and 140 are selected, due to the fact that the APs 130 and 140 both have their corresponding traffic loads lower than a predetermined threshold (i.e., the APs 130 and 140 are light-loaded).

In another embodiment for step S430, the channel qualities of the determined APs may be used instead as the basis for selecting APs, and the selected APs should have corresponding channel qualities greater than a predetermined threshold. In yet another embodiment for step S430, the operation statuses indicating whether the selected APs are operative, inoperative, reserved, or unreserved, may be used instead as the basis for selecting APs, and the selected APs should have corresponding operation statuses indicating that the selected APs are operative and/or unreserved. In still another embodiment for step S430, any combination of the traffic loads, channel qualities, and operation statuses may be used instead as the basis for selecting APs.

Subsequent to step S430, the base station 1211 sorts the selected APs, i.e., the APs 130 and 140, in descending order of their corresponding signal qualities, wherein the descending order prioritizes the selected APs which have greater signal qualities (step S440). In another embodiment for step S440, the base station 1211 may sort the selected APs in ascending order of their corresponding traffic loads, wherein the ascending order prioritizes the selected APs which have lower traffic loads. In yet another embodiment for step S440, the base station 1211 may sort the selected APs in order of their corresponding deployment indicators indicating whether the selected APs are deployed by an operator of the base station 1211 or by the operator's partner, wherein the order prioritizes the selected APs which have corresponding deployment indicators indicating that the selected APs are deployed by the operator of the base station 1211. That is, the operator-deployed APs have higher priorities than the partner-deployed APs. In still another embodiment for step S440, the base station 1211 may use any combination of the traffic loads, signal qualities, and deployment indicators of the selected APs as the basis for sorting the selected APs. For example, the base station 1211 may use the traffic loads as the first basis for sorting the selected APs, and if there are more than one selected APs having the same traffic load, the base station 1211 may then use the deployment indicators as the second basis for sorting the selected APs having the same traffic load, and further if there are more than one selected APs having the same traffic load and deployment indicator, the base station 1211 may then use the signal qualities as the third basis for sorting the selected APs having the same traffic load and deployment indicator.

Please note that, with the sorted ordering resulted from step S440, the base station 1211 does not need to send the information concerning the traffic loads or signal qualities of the selected APs to the mobile communication device 110, thereby saving wireless resources (e.g., channel bandwidth) of the base station 1211.

Subsequent to step S440, the base station 1211 further skims off a predetermined number of the selected APs from the head of the sorted ordering (step S450), and send the access information of the predetermined number of the selected APs, i.e., the skimmed-off APs, to the mobile communication device 110 (S460). In another embodiment, step S450 may be omitted if there's no limitation on the number of APs which the access information thereof is to be sent, i.e., the access information of all of the selected APs may be sent to the mobile communication device 110.

When receiving the access information of the selected APs, the mobile communication device 110 scans for only the APs indicated by the access information to connect to one of the scanned APs (step S470). That is, the mobile communication device 110 does not scan for the APs which are not indicated by the access information, thereby saving power and time for the task of AP scanning.

Upon sending the access information of the skimmed-off APs, the base station 1211 proceeds to determine a repetition frequency for repeating the sending of the access information according to the information concerning whether the skimmed-off APs are deployed in hot spots (e.g., train stations, bus stands, and department stores, etc.), and/or the information concerning whether the current time is rush hour (e.g., 7am to 9am, and 5pm to 7pm, etc.) (step S480). That is, step S460 may be repeated at the repetition frequency. For example, step S460 may be repeated every 1 second when the skimmed-off APs are deployed in a train station, or every 5 seconds when the skimmed-off APs are deployed in a football stadium (in the off-season). Step S460 may be repeated every 1 second during 7am to 9am or every 5 seconds during other times of a day, when the skimmed-off APs are deployed near a bus stand.

While the invention has been described by way of example and in terms of preferred embodiment, it is to be understood that the invention is not limited thereto. Those who are skilled in this technology can still make various alterations and modifications without departing from the scope and spirit of this invention.

Use of ordinal terms such as "first" and "second" in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

## Claims

1. A base station, providing a cellular access service in a cell coverage, comprising:
a wireless module performing wireless transmissions and receptions to and from a mobile communication device using a telecommunication technology; and
a controller module determining one or more Access Points (APs) providing a Short Range Wireless (SRW) service in the cell coverage, selecting one or more APs from the determined APs, and sending access information of the selected APs to the mobile communication device.

2. The base station of claim 1, wherein the access information of the selected APs is sent via a broadcast message or a dedicated message.

3. The base station of claim 1, wherein the selecting of APs from the determined APs is performed according to at least one of the following:
traffic loads of the determined APs;
channel qualities of the determined APs; and
operation statuses of the determined APs, which indicate whether each of the determined APs is operative, inoperative, reserved, or unreserved.

4. The base station of claim 3, wherein the selected APs have corresponding traffic loads lower than a first predetermined threshold, or have corresponding channel qualities greater than a second predetermined threshold, or have corresponding operation statuses indicating that the selected APs are operative or unreserved.

5. The base station of claim 1, wherein, prior to sending the access information of the selected APs, the controller module further sorts the selected APs in an order of at least one of the following:
traffic loads of the selected APs;
signal qualities of the selected APs; and
deployment indicators of the selected APs, which indicate whether each of the selected APs is deployed by an operator of the base station or by the operator's partner.

6. The base station of claim 5, wherein the order prioritizes the selected APs which have lower traffic loads, greater signal qualities, or corresponding deployment indicators indicating that the selected APs are deployed by the operator of the base station, and the access information of the selected APs is sent in the order.

7. The base station of claim 5, wherein the controller module further skims off a predetermined number of the selected APs from the head of the order, and the sent access information is limited to the access information of the predetermined number of the selected APs.

8. The base station of claim 1, wherein the controller module further determines a repetition frequency for repeating the sending of the access information of the selected APs according to at least one of the following:
information concerning whether the selected APs are deployed in hot spots;
and
information concerning whether a current time is rush hour.

9. The base station of claim 8, wherein the repetition frequency is determined to have a first value when the selected APs are deployed in hot spots or the current time is rush hour, and is determined to have a second value when the selected APs are not deployed in hot spots or the current time is not rush hour, and wherein the first value is greater than the second value.

10. A mobile communication device, camped on or connected to a base station, comprising:
a first wireless module performing wireless transmissions and receptions to and from the base station using a telecommunication technology;
a second wireless module performing wireless transmissions and receptions using a Short Range Wireless (SRW) technology; and
a controller module receiving access information of one or more Access Points (APs) from the base station via the first wireless module, and scanning for only the APs indicated by the access information to connect to one of the scanned APs via the second wireless module.

11. The mobile communication device of claim 10, wherein the access information of the APs is received via a broadcast message or a dedicated message.

12. The mobile communication device of claim 10, wherein the APs are sorted in an order of at least one of the following:
traffic loads of the APs;
signal qualities of the APs; and
deployment indicators of the APs, which indicate whether each of the APs is deployed by an operator of the base station or by the operator's partner.

13. The mobile communication device of claim 12, wherein the order prioritizes the APs which have lower traffic loads, greater signal qualities, or corresponding deployment indicators indicating that the APs are deployed by the operator of the base station.

14. A method for assisting a mobile communication device in connecting to an Access Point (AP) when camped on or connected to a base station, comprising:
determining, by the base station, one or more APs providing a Short Range Wireless (SRW) service in a cell coverage of the base station;
selecting, by the base station, one or more APs from the determined APs;
and
sending, by the base station, access information of the selected APs to the mobile communication device.

15. The method of claim 14, further comprising:
scanning, by the mobile communication device, for only the selected APs indicated by the access information to connect to one of the scanned APs.

16. The method of claim 14, wherein the access information of the selected APs is sent via a broadcast message or a dedicated message.

17. The method of claim 14, wherein the selecting of APs from the determined APs is performed according to at least one of the following:
traffic loads of the determined APs;
channel qualities of the determined APs; and
operation statuses of the determined APs, which indicate whether each of the determined APs is operative, inoperative, reserved, or unreserved.

18. The method of claim 17, wherein the selected APs have corresponding traffic loads lower than a first predetermined threshold, or have corresponding channel qualities greater than a second predetermined threshold, or have corresponding operation statuses indicating that the selected APs are operative or unreserved.

19. The method of claim 14, further comprising, prior to sending the access information of the selected APs, sorting, by the base station, the selected APs in an order of at least one of the following:
traffic loads of the selected APs;
signal qualities of the selected APs; and
deployment indicators of the selected APs, which indicate whether each of the selected APs is deployed by an operator of the base station or by the operator's partner.

20. The method of claim 19, wherein the order prioritizes the selected APs which have lower traffic loads, greater channel qualities, or corresponding deployment indicators indicating that the selected APs are deployed by the operator of the base station.

21. The method of claim 19, further comprising:
skimming off, by the base station, a predetermined number of the selected APs from the head of the order, wherein the sent access information is limited to the access information of the predetermined number of the selected APs.

22. The method of claim 14, further comprising determining, by the base station, a repetition frequency for repeating the sending of the access information of the selected APs according to at least one of the following:
information concerning whether the selected APs are deployed in hot spots; and
information concerning whether a current time is rush hour.

23. The method of claim 22, wherein the repetition frequency is determined to have a first value when the selected APs are deployed in hot spots or the current time is rush hour, and is determined to have a second value when the selected APs are not deployed in hot spots or the current time is not rush hour, and wherein the first value is greater than the second value.
